# EUROPEAN PATENT SPECIFICATION

(11) **EP 3 046 290 B1**
(45) Date of publication and mention of the grant of the patent: **12.12.2018**
(21) Application number: 16151163.9
(22) Date of filing: 14.01.2016
(51) Int. Cl.: H04L 12/64, H04L 12/28, H04W 4/021, H04W 4/12

(54) **METHOD AND DEVICE FOR GENERATING PROMPT**
VERFAHREN UND VORRICHTUNG ZUR ERZEUGUNG VON ABFRAGEN
PROCÉDÉ ET DISPOSITIF POUR GÉNÉRER UN PROMPT

(30) Priority: 15.01.2015 CN 201510020696; 29.01.2015 CN 201510046469
(43) Date of publication of application: 20.07.2016
(73) Proprietor: Xiaomi Inc., Beijing 100085 (CN)
(72) Inventor: WANG, Yang, 100085 BEIJING (CN); FU, Qiang, 100085 BEIJING (CN); HOU, Enxing, 100085 BEIJING (CN)
(74) Representative: Perrot, Emilie

(56) References cited:
- WO-A1-99/02987
- WO-A1-2016/001338
- CN-A- 103 528 167
- CN-Y- 201 381 735
- US-A1- 2014 313 032

## Description

### TECHNICAL FIELD

The invention generally relates to the field of smart home, and in particular to a method and device for generating a prompt.

### BACKGROUND

In daily life, a user usually allows indoor and outdoor air to circulate by opening doors and windows, thereby purifying the indoor air.

However, on one hand, the user often forgets to open or close the window, on the other hand, the user often cannot judge exactly the difference between indoor air quality and outdoor air quality, so when the doors and windows are opened or closed unreasonably, an indoor air environment is bad, which influences the health of user.

Document CN 103 528 167 discloses an energy efficiency monitoring method and system capable of balancing air-conditioning energy saving and environmental air quality monitoring. Document CN 201 381 735 discloses a door/window status monitoring device. Document WO 99/02987 discloses a device for monitoring the air quality. Document US 2014/0313032 discloses a method for operating a security monitoring system which involves determining whether members of a group need to be notified, by the security monitoring system, and notifying members of the group of events via a network.

### SUMMARY

Accordingly, the invention provides a method and device for generating a prompt, in accordance with the claims following.

According to a first aspect, the invention relates to a method for generating a prompt, comprising:
acquiring information about an open-or-closed state of a door or window;
acquiring information about indoor and outdoor environments; and
generating a prompt according to the information about the open-or-closed state of the door or window and the information about the indoor and outdoor environments.

By acquiring the information about the open-or-closed state of the door or window, acquiring the information about indoor and outdoor environments, generating the prompt according to the information about the open-or-closed state of the door or window and the information about the indoor and outdoor environments, it is solved the problem that when the door or window are opened or closed unreasonably, an indoor air environment gets bad, which influences the health of user, and it is achieved the effect of reminding the user to open or close the door or window reasonably according to the condition of indoor and outdoor environments, thereby not only improving the indoor air quality, but also preventing theft and protecting the security of user.

According to an exemplary embodiment, the step of generating the prompt according to the information about the open-or-closed state of the door or window and the information about the indoor and outdoor environments may comprise that:
a correct open-or-closed state the door or window is supposed to be in is determined according to the information about the indoor and outdoor environments;
it is detected that whether the open-or-closed state of the door or window is identical to the correct open-or-closed state; and
in the case that the open-or-closed state of the door or window is different from the correct open-or-closed state, the prompt is generated according to the correct open-or-closed state.

According to an exemplary embodiment, the step of determining the correct open-or-closed state the door or window is supposed to be in according to the information about the indoor and outdoor environments may comprise that:
it is detected that whether outdoor environment quality is better than indoor environment quality according to the information about the indoor and outdoor environments;
in the case that the outdoor environment quality is better than the indoor environment quality, it is determined that the correct open-or-closed state is an open state; or in the case that the indoor environment quality is better than the outdoor environment quality, it is determined that the correct open-or-closed state is a closed state.

According to an exemplary embodiment, the step of determining the correct open-or-closed state the door or window is supposed to be in according to the information about the indoor and outdoor environments may comprise that:
it is acquired working state information of a specified device which is carried in the information about indoor and outdoor environments;
in the case that the working state information indicates that the specified device is in a running state, it is determined that the correct open-or-closed state is a closed state; or in the case that the working state information indicates that the specified device is in an off state, it is determined that the correct open-or-closed state is an open state,
the specified device may comprise: an air purifier, a refrigerating unit or a heating unit.

According to an exemplary embodiment, the step of determining the correct open-or-closed state the door or window is supposed to be in according to the information about the indoor and outdoor environments may comprise that:
it is acquired harmful indoor gas content which is carried in the information about the indoor and outdoor environments;
it is detected that whether the harmful indoor gas content exceeds a preset threshold; and
if the harmful indoor gas content exceeds the preset threshold, then it is determined that the correct open-or-closed state is an open state.

According to an exemplary embodiment, the method may further comprise that:
the prompt is sent to a mobile terminal.

According to an exemplary embodiment, the step of sending the prompt to the mobile terminal may comprise that:
it is acquired state information of the mobile terminal, which comprises at least one of the following: information about an on-or-off state of the mobile terminal and information about geographic location of the mobile terminal;
the prompt is sent to the mobile terminal according to the state information.

According to an exemplary embodiment, the step of sending the prompt to the mobile terminal according to the state information may comprise that:
the prompt is sent to the mobile terminal which is in an on state according to the information about the on-or-off state; or
the prompt is sent to the mobile terminal which is in the on state and is nearest to the door or window according to the information about the on-or-off state and the information about the geographic location; or
the prompt is sent to the mobile terminal which is entering or leaving a preset area around the door or window according to the information about the geographic location.

According to an exemplary embodiment, the method may further comprise that:
it is controlled the open-or-closed state of the door or window, the open-or-closed state comprises at least one of the following: whether the door or window is open, an open mode of the door or window, and an open angle of the door or window.

According to an exemplary embodiment, the step of controlling the open-or-closed state of the door or window may comprise that:
the door or window is controlled to open or close automatically according to the prompt; or
it is received feedback information which is sent by the mobile terminal in response to the received prompt; and the door or window is controlled to open or close according to the feedback information.

According to a second aspect, the invention relates to a device for generating a prompt, comprising:
a first acquiring module, configured to acquire information about an open-or-closed state of a door or window;
a second acquiring module, configured to acquire information about indoor and outdoor environments; and
a generating module, configured to generate a prompt according to the information about the open-or-closed state of the door or window and the information about the indoor and outdoor environments.

The advantages and technical effects of the device according to the invention correspond to those of the method presented above.

According to an exemplary embodiment, the generating module may comprise:
a determining sub-module, configured to determine a correct open-or-closed state the door or window is supposed to be in according to the information about the indoor and outdoor environments;
a detecting sub-module, configured to detect whether the open-or-closed state of the door or window is identical to the correct open-or-closed state; and
a generating sub-module, configured to, in the case that the open-or-closed state of the door or window is different from the correct open-or-closed state, generate the prompt according to the correct open-or-closed state.

According to an exemplary embodiment, the determining sub-module may comprise:
a first detecting sub-module, configured to detect whether the outdoor environment quality is better than the indoor environment quality according to the information about the indoor and outdoor environments; and
a first determining sub-module, configured to, in the case that the outdoor environment quality is better than the indoor environment quality, determine that the correct open-or-closed state is an open state, or in the case that the indoor environment quality is better than the outdoor environment quality, determine that correct open-or-closed state is a closed state.

According to an exemplary embodiment, the determining sub-module may comprise:
a first acquiring sub-module, configured to acquire working state information of a specified device which is carried in the information about the indoor and outdoor environments; and
a second determining sub-module, configured to, in the case that the working state information indicates that the specified device is in a running state, determine that the correct open-or-closed state is a closed state, or in the case that the working state information indicates that the specified device is in an off state, determine that the correct open-or-closed state is an open state,
the specified device comprises: the air purifier, the refrigerating unit or the heating unit.

According to an exemplary embodiment, the determining sub-module may comprise:
a second acquiring sub-module, configured to acquire the harmful indoor gas content which is carried in the information about the indoor and outdoor environments;
a second detecting sub-module, configured to detect whether the harmful indoor gas content exceeds the preset threshold; and
a third determining sub-module, configured to, when the harmful indoor gas content exceeds the preset threshold, determine that the correct open-or-closed state is an open state.

According to an exemplary embodiment, the device may further comprise:
a sending module, configured to send the prompt to the mobile terminal.

According to an exemplary embodiment, the sending module may comprise:
a third acquiring sub-module, configured to acquire state information of the mobile terminal, wherein the state information comprises at least one of the following: information about an on-or-off state of the mobile terminal and information about geographic location of the mobile terminal;
a sending sub-module, configured to send the prompt to the mobile terminal according to the state information.

According to an exemplary embodiment, the sending sub-module may comprise:
a first sending sub-module, configured to send the prompt to the mobile terminal which is in an on state according to the information about the on-or-off state; or
a second sending sub-module, configured to send the prompt to the mobile terminal which is in the on state and is nearest to the door or window according to the information about the on-or-off state and the information about the geographic location; or
a third sending sub-module, configured to send the prompt to the mobile terminal which is entering or leaving a preset area around the door or window according to the information about the geographic location.

According to an exemplary embodiment, the device may further comprise:
a controlling module, configured to control the open-or-closed state of the door or window, wherein the open-or-closed state comprises at least one of the following: whether the door or window is open, an open mode of the door or window, and an open angle of the door or window.

According to an exemplary embodiment, the controlling module may comprise:
a first controlling sub-module, configured to control the door or window to open or close automatically according to the prompt; or
a second controlling sub-module, configured to receive feedback information which is sent by the mobile terminal in response to the received the prompt, and control the door or window to open or close according to the feedback information.

According to a third aspect, the invention relates to a device for generating a prompt, comprising:
a processor; and
a memory for storing instructions executable by the processor,
the processor is configured to:
   acquire information about an open-or-closed state of a door or window;
   acquire information about indoor and outdoor environments; and
   generate a prompt according to the information about the open-or-closed state of the door or window and the information about the indoor and outdoor environments.

In one particular embodiment, the steps of the method for generating a prompt are determined by computer program instructions.

Consequently, according to a fourth aspect, the invention is also directed to a computer program for executing the steps of a method for generating a prompt as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a diagram of implementation environments for each embodiment of the invention;
Fig. 2 is a flowchart of a method for generating a prompt according to an exemplary embodiment;
Fig. 3A is a flowchart of a method for generating a prompt according to another exemplary embodiment;
Fig. 3B is a flowchart of a process of determining the correct open-or-closed state the door or window is supposed to be in involved in the method for generating a prompt according to another exemplary embodiment;
Fig. 3C is a flowchart of a process of sending the prompt involved in the method for generating prompt according to another exemplary embodiment;
Fig. 3D is a flowchart of a process of controlling the open or closed state of the door or window involved in the method for generating a prompt according to another exemplary embodiment;
Fig. 3E is a diagram of the implementation of the method for generating a prompt according to another exemplary embodiment;
Fig. 3F is a flowchart of the process of determining the correct open-or-closed state the door or window is supposed to be in involved in the method for generating a prompt according to another exemplary embodiment;
Fig. 3G is a flowchart of the process of determining the correct open-or-closed state the door or window is supposed to be in involved in the method for generating a prompt according to another exemplary embodiment;
Fig. 3H is a flowchart of the process of sending the prompt involved in the method for generating a prompt according to another exemplary embodiment;
Fig. 4 is a structural diagram of a device for generating a prompt according to an exemplary embodiment;
Fig. 5 is a structural diagram of the device for generating a prompt according to another exemplary embodiment; and
Fig. 6 is a block diagram of a device for generating a prompt according to an exemplary embodiment.

The specific embodiments of the invention are shown through the above accompanying drawings, and more detailed description will be given hereinafter. These accompanying drawings and text description do not limit the scope of conception of the invention in any way, but illustrate concepts of the invention for the skilled personnel in the field by referring to particular embodiments.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

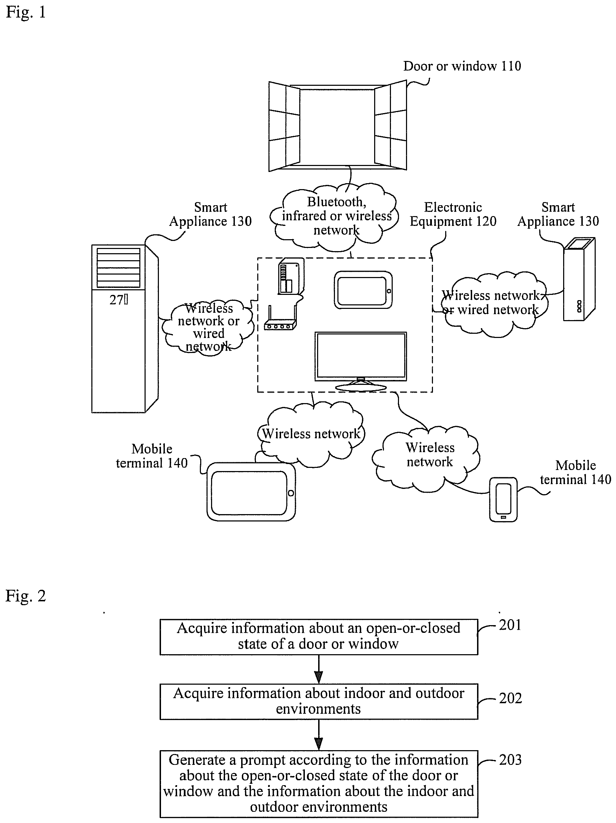

Fig. 1 is a diagram of implementation environments for each embodiment of the invention. The implementation environments include a door or window 110, electronic equipment 120, a smart appliance 130 and a mobile terminal 140.

The door or window 110 comprises a control chip and a mechanical control unit for controlling the door or window to open or close, these control chip and mechanical control unit being connected with the electronic equipment 120 through Bluetooth, infrared or a wireless network. The door or window in the embodiments of the invention is: a door, a window, or a combination of a door and a window.

The electronic equipment 120, which has a processing function, may be a residential gateway, a server connected with the residential gateway, a smart appliance or a piece of mobile equipment at home. The residential gateway may be an intelligent router. The smart appliance may be a smart television or a smart set top box, and so on. The mobile equipment at home may be a tablet computer or laptop computer, and so on. As shown in Fig. 1, the electronic equipment may be any one of the intelligent router, the server connected with the intelligent router, the smart television and the tablet computer.

The electronic equipment 120 is connected with the smart appliance 130 through a wired or wireless network.

The smart appliance 130 may be an intelligent air purifier, an intelligent air conditioner, a piece of intelligent gas equipment or an intelligent floor heating system, and so on.

The electronic equipment 120 is connected with the mobile terminal 140 through a wireless network.

The mobile terminal 140 may be a piece of portable intelligent equipment, and the intelligent equipment may be a smart phone or the tablet computer, and so on.

For facilitating description, the following embodiments are illustrated by just taking that the electronic equipment 120 is the intelligent router for example, which does not form a limit to the invention.

Fig. 2 is a flowchart of a method for generating a prompt according to an exemplary embodiment. In this embodiment, the method for generating a prompt is performed by the electronic equipment 120 in Fig. 1, and the method for generating the prompt may include the following steps.

In Step 201, information about an open-or-closed state of a door or window is acquired.

The information about an open-or-closed state of a door or window may include at least one of the following: whether the door or window is open, the open manner of the door or window and the open angle,of the door or window.

In Step 202, information about indoor and outdoor environments is acquired.

The information about indoor and outdoor environments may include: information about weather condition, information about indoor environment quality, information about outdoor environment quality, information about indoor humidity, information about harmful gas content and working state information of a specified device, and so on.

The information about indoor environment quality is an indoor environment index which is calculated according to an indoor air environment, and the information about outdoor environment quality is an outdoor environment index which is calculated according to an outdoor air environment.

The specified device may include: the air purifier, a refrigerating unit, a heating unit or other smart appliances.

In Step 203, the prompt is generated according to the information about the open-or-closed state of the door or window and the information about the indoor and outdoor environments.

To sum up, by acquiring the information about the open-or-closed state of the door or window, acquiring the information about indoor and outdoor environments, and generating the prompt according to the information about the open-or-closed state of the door or window and the information about the indoor and outdoor environments, the method for generating a prompt provided by this exemplary embodiment solves the problem that when the door or window are opened or closed unreasonably, an indoor air environment gets bad, which influences the health of user, and achieves the effect of reminding the user to open or close the door or window reasonably according to the condition of indoor and outdoor environments, thereby not only improving the indoor air quality, but also preventing theft and protecting the security of user.

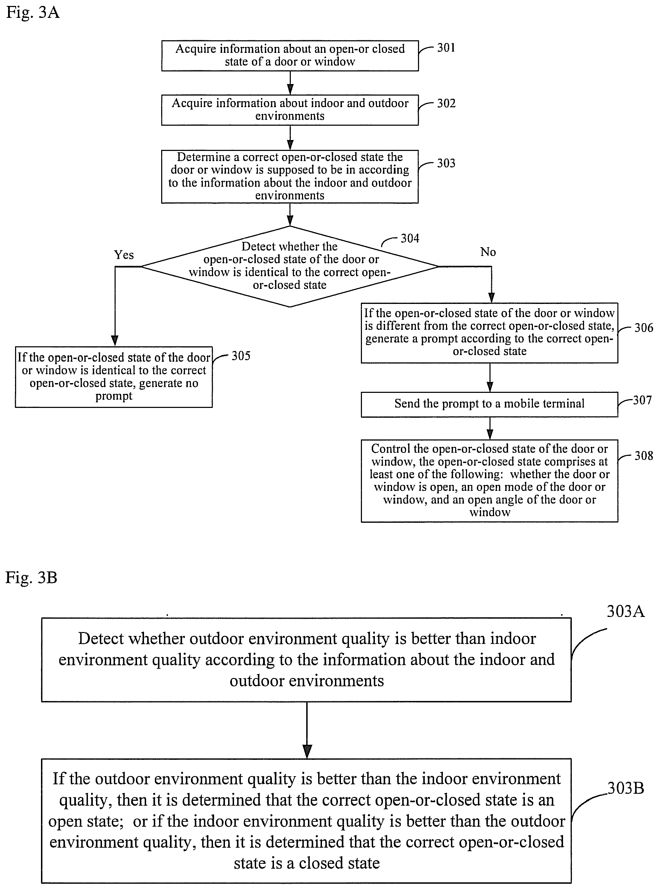

Fig. 3A is a flowchart of a method for generating a prompt according to another exemplary embodiment. This method for generating a prompt is performed by the electronic equipment 120 in Fig. 1. For facilitating description, this embodiment is illustrated by taking that the electronic equipment 120 is the intelligent router for example. The method for generating a prompt may include the following steps.

In Step 301, information about an open-or-closed state of a door or window is acquired.

There is a sensor pre-installed on the door or window by the user. The sensor may be an infrared distance sensor or a mechanical sensor installed on the frame of the door or window. The sensor is configured for acquiring the information about the open-or-closed state of a door or window. The information about the open-or-closed state of a door or window may include at least one of the following: whether the door or window is open, the open manner of the door or window and the open angle of the door or window. The open manner of the door, or window may include: side hung open manner, top-hung casement open manner, sliding sash open manner, and so on.

For example, the sensor on the door or window can determine whether the door/window is open by detecting whether the door/window is separated from the frame. Furthermore, the sensor can also calculate the open angle of the door or window by acquiring a distance between the door (or window) and the frame.

The sensor is also connected with the electronic equipment 120 in Fig. 1 through a Bluetooth, infrared or wireless network. For example, when the electronic equipment 120 is the intelligent router, the sensor can be connected with the intelligent router through the wireless network and sends the acquired information about the open-or-closed state of a door or window to the intelligent router. Correspondingly, the intelligent router receives the information about the open-or-closed state of a door or window sent from the sensor.

Note that, this embodiment is illustrated by just taking that the electronic equipment 120 is the intelligent router for example, which does not form a limit to the invention.

In Step 302, information about indoor and outdoor environments is acquired.

The information about indoor and outdoor environments may include: information about weather condition, information about indoor environment quality, information about outdoor environment quality, information about indoor humidity, information about harmful gas content and working state information of a specified device, and so on.

The specified device may be a smart appliance bound with the intelligent router in advance. The specified device sends its working state information to the intelligent router when its working state changes. The specified device may include: the air purifier, a refrigerating unit, a heating unit or other smart appliances.

The intelligent router may acquire the information about weather condition and the information about outdoor environment quality by looking up on the Internet. The intelligent router is also connected with the smart appliance at home through the wired or wireless network, and receives the information about indoor environment quality, the information about indoor humidity, the information about harmful gas content and the working state information of the specified device sent by the smart appliance.

For example, the air purifier at home may be connected with the intelligent router, and sends the acquired information about indoor environment quality, information about indoor humidity and information about harmful gas content to the intelligent router.

For example, the intelligent floor heating system at home may be connected with the intelligent router. The intelligent floor heating system may report its working state information to the intelligent router during working.

In Step 303, the correct open-or-closed state the door or window is supposed to be in is determined according to the information about indoor and outdoor environments.

The outdoor environment quality may be poorer than the indoor environment quality, when the user opens the door or window, indoor air pollution may be caused, so the intelligent router needs to estimate the indoor environment quality and the outdoor environment quality according to the acquired information about indoor and outdoor environments, and further determines the correct open-or-closed state the door or window is supposed to be in.

Optionally, as shown in Fig. 3B, Step 303 may include the following steps.

In Step 303A, it is detected that whether the outdoor environment quality is better than the indoor environment quality according to the information about indoor and outdoor environments.

The intelligent router acquires the information about indoor environment quality carried in the information about indoor environment and the information about outdoor environment quality carried in the information about outdoor environment, and detects whether the outdoor environment quality is better than the indoor environment quality according to the information about indoor environment quality and the information about outdoor environment quality.

For example, the information about indoor environment quality and the information about outdoor environment quality are environment pollution indexes calculated according to pollutant content of the air respectively. The higher the environment pollution index is, the poorer the environment quality is. The intelligent router detects whether the outdoor environment quality is better than the indoor environment quality by comparing the environment pollution indexes.

In Step 303B, if the outdoor environment quality is better than the indoor environment quality, then it is determined that the correct open-or-closed state is an open state; or if the indoor environment quality is better than the outdoor environment quality, then it is determined that the correct open-or-closed state is a closed state.

When it is detected that an environment quality index corresponding to the information about indoor environment quality is greater than the environment quality index corresponding to the information about outdoor environment quality, namely the current outdoor environment is better than the current indoor environment, opening the door or window for ventilation can purify the indoor air, and the intelligent router determines that the correct open-or-closed state is an open state. When it is detected that the environment quality index corresponding to the information about indoor environment quality is less than the environment quality index corresponding to the information about outdoor environment quality, namely the current indoor environment is better than the current outdoor environment, opening the door or window for ventilation will cause indoor air pollution, and the intelligent router determines that the correct open-or-closed state is a closed state.

Note that, when it is raining, the outdoor environment quality may be better than the indoor environment quality, but opening the door or window may let rainwater enter home, so the intelligent router needs to further detect whether it is right to open the door/window now according to weather forecast information carried in the information about indoor and outdoor environments. When it is detected that it is raining or the rain will come, the intelligent router determines the closed state as the correct open-or-closed state.

In Step 304, it is detected that whether the open-or-closed state of the door or window is identical to the correct open-or-closed state.

After determining the correct open-or-closed state, the intelligent router detects whether the current open-or-closed state of the door or window is identical to the correct open-or-closed state. When it is detected that they are identical, it is proceed to Step 305; when it is detected that they are different, it is proceed to Step 306.

In Step 305, if the open-or-closed state of the door or window is identical to the correct open-or-closed state, no prompt is generated.

In Step 306, if the open-or-closed state of the door or window is different from the correct open-or-closed state, the prompt is generated according to the correct open-or-closed state.

When it is detected that the current open-or-closed state of the door or window is different from the correct open-or-closed state, the intelligent router generates the prompt according to the correct open-or-closed state. The prompt is used for reminding the user to open or close the door/window.

In Step 307, the prompt is sent to the mobile terminal.

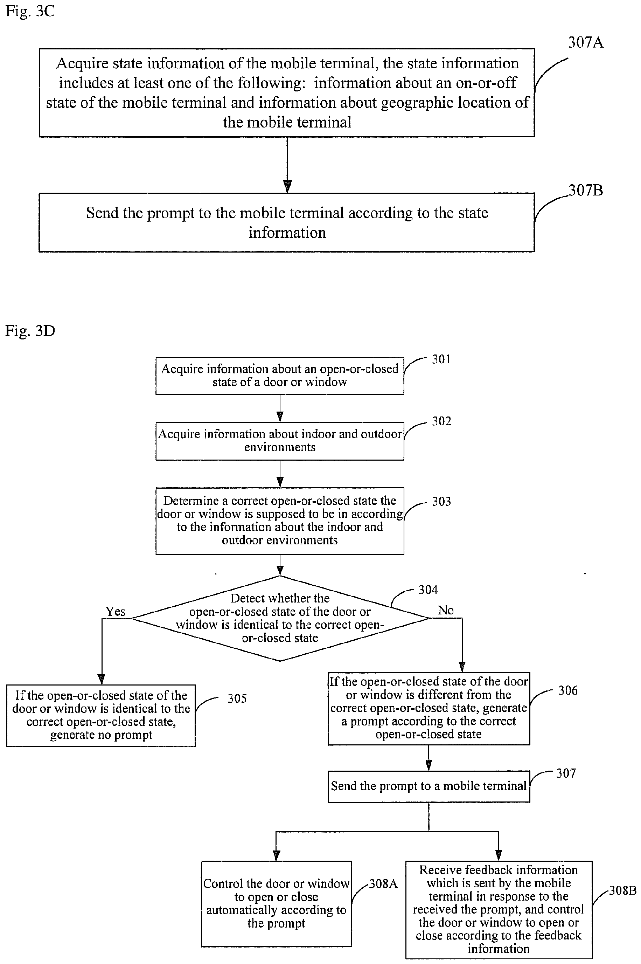

For making the user open or close the door/window according to the prompt, the intelligent router sends the prompt to the mobile terminal which is bound to the intelligent router. As shown in Fig. 3C, Step 307 may include the following steps.

In Step 307A, state information of the mobile terminal is acquired, The state information may include at least one of the following: information about an on-or-off state of the mobile terminal and information about geographic location of the mobile terminal.

For enabling the user to receive the prompt in time, the intelligent router may further acquire the state information of the bound mobile terminal. The state information includes the information about an on-or-off state of the mobile terminal and the information about geographic location of the mobile terminal, and so on. The intelligent router selects the mobile terminal which is able to receive the prompt as the target mobile terminal according to the acquired state information.

In Step 307B, the prompt is sent to the mobile terminal according to the state information.

The intelligent router sends the prompt to the target mobile terminal which is able to receive the prompt. The prompt may be text information or voice information, and so on; the invention does not limit this.

In Step 308, the open-or-closed state of the door or window is controlled. The open-or-closed state may include at least one of the following: whether the door or window is open, an open mode of the door or window, and an open angle of the door or window.

After receiving the prompt through the mobile terminal, the user can send the feedback information to the intelligent router, and then the intelligent router controls the door/window to open or close according to the feedback information. However, the user may not view the prompt or return the feedback information in time, in this case, the intelligent router may control the door/window to open or close automatically according to the prompt. As shown in Fig. 3D, Step 308 may include the following steps.

In Step 308A, the door or window is controlled to open or close automatically according to the prompt.

Optionally, after sending the prompt to the mobile terminal, the intelligent router starts a timer, and detects in a preset time span whether the feedback information sent by the mobile terminal is received. When the feedback information is not received in the preset time span, the intelligent router automatically controls the door or window to open or close according to the prompt. Note that, when the intelligent router detects that the harmful indoor gas content is greater than the preset threshold, it can automatically control the door or window to close without need of receiving the feedback information of the user.

In Step 308B, it is received the feedback information which is sent by the mobile terminal in response to the received prompt; the door or window is controlled to open or close according to the feedback information.

Optionally, after sending the prompt to the mobile terminal, the intelligent router starts the timer, and detects in the preset time span whether the feedback information sent by the mobile terminal is received. When the feedback information is received in the preset time span, the intelligent router controls the door or window to open or close according to the feedback information.

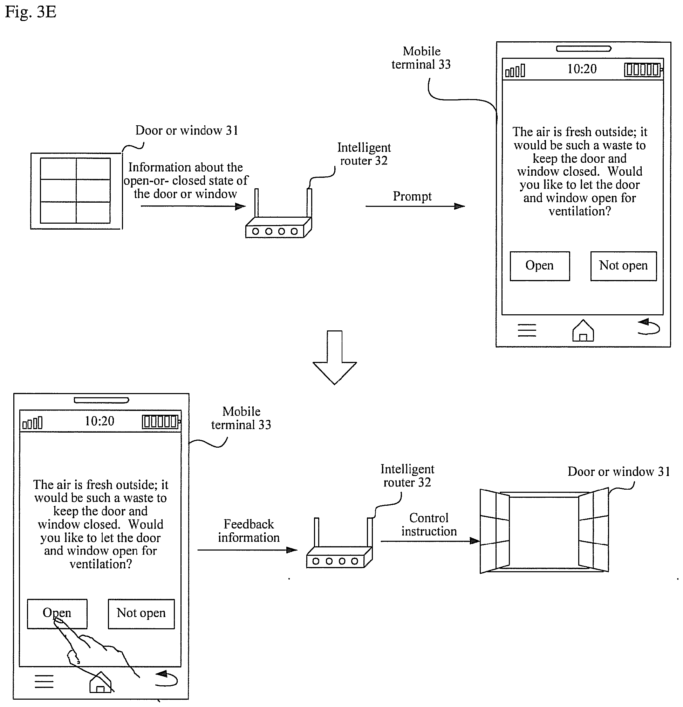

For example, as shown in Fig. 3E, the door or window 31 sends the current information about open-or-closed state of the door or window to the intelligent router 32. The intelligent router 32 generates the prompt according to the information about open-or-closed state of the door or window, and sends the prompt to the mobile terminal 33 to remind the user to open the door or window. Then, the user selects to open the door or window according to the prompt. The mobile terminal 33 sends the feedback information to the intelligent router 32 according to the selection of the user. The intelligent router 32 sends a control instruction to the door or window 31 according to the feedback information to control the door or window 31 to open.

To sum up, by acquiring the information about the open-or-closed state of the door or window, acquiring the information about indoor and outdoor environments, and generating the prompt according to the information about the open-or-closed state of the door or window and the information about the indoor and outdoor environments, the method for generating a prompt provided by this exemplary embodiment solves the problem that when the door or window are opened or closed unreasonably, an indoor air environment gets bad, which influences the health of user, and achieves the effect of reminding the user to open or close the door or window reasonably according to the condition of indoor and outdoor environments, thereby not only improving the indoor air quality, but also preventing theft and protecting the security of user.

By detecting whether the outdoor environment quality is better than the indoor environment quality, reminding the user to open the door or window when the outdoor environment quality is better than the indoor environment quality, and reminding the user to close the door or window when the indoor environment quality is better than the outdoor environment quality, this exemplary embodiment avoids the problem that when the outdoor environment is relatively bad, the indoor environment is polluted because of opening the door or window by the user, and improves the accuracy of the generated prompt.

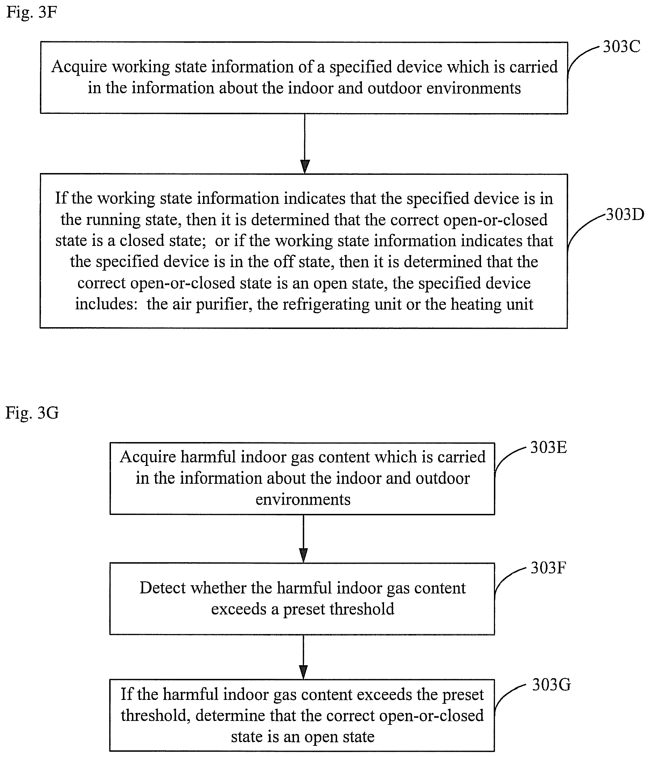

When the user is using the air purifier or other home appliances, opening the door or window will cause the problem that the home appliances cannot achieve the desired work efficiency, so the intelligent router may also determine the correct open-or-closed state the door or window is supposed to be in according to the working state information of the specified device. As a possible implementation mode, as shown in Fig. 3F, the above Step 303A and Step 303B may be replaced with Step 303C and Step 303D.

In Step 303C, it is acquired the working state information of a specified device which is carried in the information about indoor and outdoor environments.

The specified device at home is connected with the intelligent router beforehand. When the working state of the specified device changes, the specified device reports its current working state information to the intelligent router initiatively.

For example, when the air purifier is started, it sends its working state information to the intelligent router. The working state information is used for informing the intelligent router that the air purifier is working.

In Step 303D, if the working state information indicates that the specified device is in the running state, then it is determined that the correct open-or-closed state is a closed state; or if the working state information indicates that the specified device is in the off state, then it is determined that the correct open-or-closed state is an open state. The specified device may include: the air purifier, the refrigerating unit or the heating unit.

When the intelligent router determines according to the working state information that the specified device is running, for ensuring the working efficiency of the specified device, it is determined that the correct open-or-closed state is a closed state. When the intelligent router determines according to the working state information that the specified device is not running, it is determined that the correct open-or-closed state is an open state.

Note that, because of the gas equipment generates harmful gas when working, when the specified device is the gas equipment, for ensuring the health of user, the intelligent router determines that the correct open-or-closed state should be an open state when detecting that the gas equipment is running.

By determining whether it is needed to open the door or window according to the working state of the specified device, the exemplary embodiment also avoids the problem that when the user is using the specified device, the power resource is wasted because opening the door or window influences the working efficiency of the specified device, and achieves the effects of giving full play to the working efficiency of the specified device and saving the power resource.

As another possible implementation mode, the intelligent router may also determine to open or close the door or window according to harmful indoor gas content. As shown in Fig. 3G, the above Step 303A and Step 303B may be replaced with Step 303E to Step 303G.

In Step 303E, harmful indoor gas content which is carried in the information about the indoor and outdoor environments is acquired.

The intelligent router acquires the harmful indoor gas content which is carried in the information about the indoor and outdoor environments. The harmful indoor gas content may be acquired through the air purifier or other equipment.

In Step 303F, it is detected that whether the harmful indoor gas content exceeds a preset threshold.

In Step 303G, if the harmful indoor gas content exceeds the preset threshold, it is determined that the correct open-or-closed state should be an open state.

When the harmful indoor gas content exceeds the preset threshold, the indoor air is harmful to the health of user, and the intelligent router determines that the correct open-or-closed state of the door or window should be an open state.

By detecting whether the harmful indoor gas content exceeds the preset threshold, and reminding the user to open the door or window when the harmful indoor gas content exceeds the preset threshold, the exemplary embodiment also achieves the effect of ensuring the quality of the indoor air.

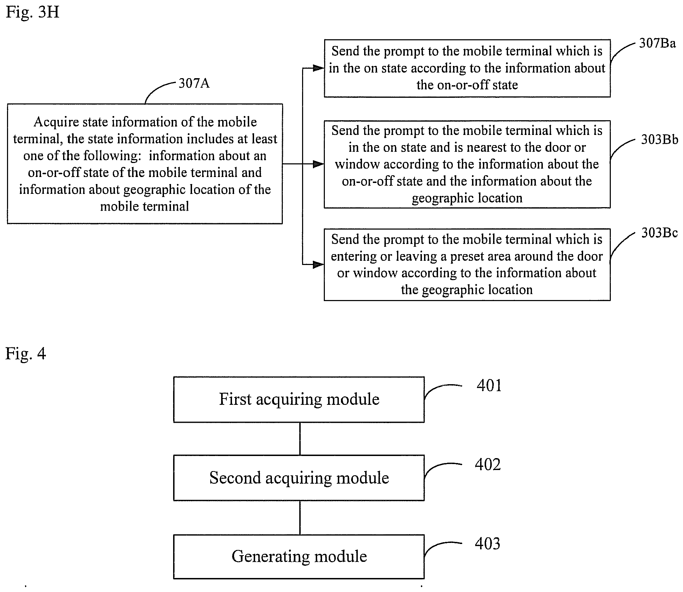

For enabling the user to receive the prompt in time, as shown in Fig. 3H, the above Step 307B may include Step 307Ba, Step 307Bb or Step 307Bc.

In Step 307Ba, the prompt is sent to the mobile terminal which is in the on state according to the information about the on-or-off state.

The intelligent router acquires information indicating the bound mobile terminal is in the on state, and sends the prompt to the mobile terminal which is in the on state.

In Step 307Bb, the prompt is sent to the mobile terminal which is in the on state and whose is nearest to the door or window according to the information about the on-or-off state and the information about the geographic location.

When the door or window cannot open or close automatically, for making the user open or close the door or window in time, the intelligent router determines the mobile terminal which is nearest to the door or window as the target mobile terminal according to the information about geographic location of the mobile terminal which is in the on state, and sends the prompt to the target mobile terminal.

In Step 307Bc, the prompt is sent, according to the information about geographic location, to the mobile terminal which is entering or leaving a preset area around the door or window.

When the intelligent router detects that the bound mobile terminal is connected to it, it can be determined that the mobile terminal has entered the preset area around the door or window. When the intelligent router detects that the bound mobile terminal gets disconnected with it, the intelligent router further acquires the information about geographic location of the mobile terminal. When the information about geographic location indicates that the mobile terminal is far from the intelligent router, it can be determined that the mobile terminal is leaving the preset area around the door or window.

For example, when the intelligent router determines that it is needed to close the door or window, and detects that there is a bound mobile terminal connected to the intelligent router, the intelligent router can determine that the mobile terminal is the one having entered the preset area around the door or window, and sends the prompt to the mobile terminal.

By sending the prompt to the mobile terminal which is in the on state or the mobile terminal which is in the on state and nearest to the door or window, the exemplary embodiment also ensures that the user can be reminded in time to open or close the door or window, and achieves the effect of improving timeliness of the prompt.

The following are embodiments of the device of the invention, which can be used for implementing the embodiments of the method of the invention. The details which are not discussed in the embodiments of the device of the invention may be found in the embodiments of the method of the invention.

Fig. 4 is a structural diagram of a device for generating a prompt according to an exemplary embodiment. The device for generating a prompt can be a part or all of the electronic equipment 120 in Fig. 1 through software, hardware or a combination of them. The device for generating a prompt may include:
a first acquiring module 401, which is configured to acquire information about an open-or-closed state of a door or window;
a second acquiring module 402, which is configured to acquire information about indoor and outdoor environments; and
a generating module 403, which is configured to generate the prompt according to the information about the open-or-closed state of the door or window and the information about the indoor and outdoor environments.

To sum up, by acquiring the information about the open-or-closed state of the door or window, acquiring the information about indoor and outdoor environments, and generating the prompt according to the information about the open-or-closed state of the door or window and the information about the indoor and outdoor environments, the device for generating a prompt provided by this exemplary embodiment solves the problem that when the door or window are opened or closed unreasonably, an indoor air environment gets bad, which influences the health of user, and achieves the effect of reminding the user to open or close the door or window reasonably according to the condition of indoor and outdoor environments, thereby not only improving the indoor air quality, but also preventing theft and protecting the security of user.

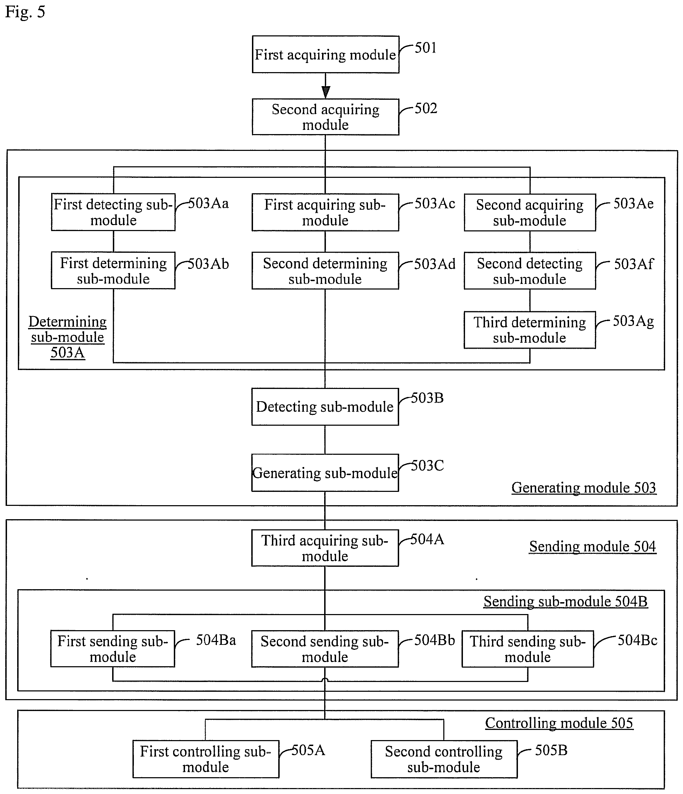

Fig. 5 is a structural diagram of the device for generating a prompt according to another exemplary embodiment. The device for generating a prompt can be a part or all of the electronic equipment 120 in Fig. 1 through software, hardware or the combination of them. The device for generating a prompt may include:
a first acquiring module 501, which is configured to acquire information about an open-or-closed state of a door or window;
a second acquiring module 502, which is configured to acquire the information about indoor and outdoor environments; and
a generating module 503, which is configured to generate the prompt according to the information about the open-or-closed state of the door or window and the information about the indoor and outdoor environments.

Optionally, the generating module 503 may include:
a determining sub-module 503A, which is configured to determine a correct open-or-closed state the door or window is supposed to be in according to the information about the indoor and outdoor environments;
a detecting sub-module 503B, which is configured to detect whether the open-or-closed state of the door or window is identical to the correct open-or-closed state; and
a generating sub-module 503C, which is configured to, when the open-or-closed state of the door or window is different from the correct open-or-closed state, generate the prompt according to the correct open-or-closed state.

Optionally, the determining sub-module 503A may include:
a first detecting sub-module 503Aa, which is configured to detect whether the outdoor environment quality is better than the indoor environment quality according to the information about the indoor and outdoor environments; and
a first determining sub-module 503Ab, which is configured to, when the outdoor environment quality is better than the indoor environment quality, determine that the correct open-or-closed state is an open state, or when the indoor environment quality is better than the outdoor environment quality, determine that the correct open-or-closed state is a closed state.

Optionally, the determining sub-module 503A may include:
a first acquiring sub-module 503Ac, which is configured to acquire a working state information of a specified device which is carried in the information about the indoor and outdoor environments; and
a second determining sub-module 503Ad, which is configured to, when the working state information indicates that the specified device is in the running state, determine that the correct open-or-closed state is a closed state, or when the working state information indicates that the specified device is in the off state, determine that the correct open-or-closed state is an open state;
the specified device may include: the air purifier, a refrigerating unit or a heating unit.

Optionally, the determining sub-module 503A may include:
a second acquiring sub-module 503Ae, which is configured to acquire harmful indoor gas content which is carried in the information about the indoor and outdoor environments;
a second detecting sub-module 503Af, which is configured to detect whether the harmful indoor gas content exceeds a preset threshold; and
a third determining sub-module 503Ag, which is configured to, when the harmful indoor gas content exceeds the preset threshold, determine that the correct open-or-closed state is an open state.

Optionally, the device may further include:
a sending module 504, which is configured to send the prompt to the mobile terminal.

Optionally, the sending module 504 may include:
a third acquiring sub-module 504A, which is configured to acquire state information of the mobile terminal, the state information including at least one of the following: information about an on-or-off state of the mobile terminal and information about geographic location of the mobile terminal; and
a sending sub-module 504B, which is configured to send the prompt to the mobile terminal according to the state information.

Optionally, the sending sub-module 504B may include:
a first sending sub-module 504Ba, which is configured to send the prompt to the mobile terminal which is in the on state according to the information about the on-or-off state; or
a second sending sub-module 504Bb, which is configured to send the prompt to the mobile terminal which is in the on state and is nearest to the door or window according to the information about the on-or-off state and the information about the geographic location; or
a third sending sub-module 504Bc, which is configured to send the prompt to the mobile terminal which is entering or leaving the preset area around the door or window according to the information about the geographic location.

Optionally, the device may further include:
a controlling module 505, which is configured to control the open-or-closed state of the door or window. The open-or-closed state may include at least one of the following: whether the door or window is open, an open mode of the door or window, and an open angle of the door or window.

Optionally, the controlling module 505 may include:
a first controlling sub-module 505A, which is configured to control the door or window to open or close automatically according to the prompt; or
a second controlling sub-module 505B, which is configured to receive feedback information which is sent by the mobile terminal in response to the received the prompt, and control the door or window to open or close according to the feedback information.

To sum up, by acquiring the information about the open-or-closed state of the door or window, acquiring the information about indoor and outdoor environments, and generating the prompt according to the information about the open-or-closed state of the door or window and the information about the indoor and outdoor environments, the device for generating a prompt provided by this exemplary embodiment solves the problem that when the door or window are opened or closed unreasonably, an indoor air environment gets bad, which influences the health of user, and achieves the effect of reminding the user to open or close the door or window reasonably according to the condition of indoor and outdoor environments, thereby not only improving the indoor air quality, but also preventing theft and protecting the security of user.

By detecting whether the outdoor environment quality is better than the indoor environment quality, reminding the user to open the door or window when the outdoor environment quality is better than the indoor environment quality, and reminding the user to close the door or window when the indoor environment quality is better than the outdoor environment quality, this exemplary embodiment avoids the problem that when the outdoor environment is relatively bad, the indoor environment is polluted because of opening the door or window by the user, and improves accuracy of the generated prompt.

By determining whether it is needed to open the door or window according to the working state of the specified device, the exemplary embodiment also avoids the problem that when the user is using the specified device, the power resource is wasted because opening the door or window influences the working efficiency of the specified device, and achieves the effects of giving full play to the working efficiency of the specified device and saving the power resource.

By detecting whether the harmful indoor gas content exceeds the preset threshold, and reminding the user to open the door or window when the harmful indoor gas content exceeds the preset threshold, the exemplary embodiment also achieves the effect of ensuring the quality of the indoor air.

By sending the prompt to the mobile terminal which is in the on state or the mobile terminal which is in the on state and nearest to the door or window, the exemplary embodiment also ensures that the user can be reminded to open or close the door or window in time, and achieves the effect of improving timeliness of the prompt.

About the device in the above embodiments, the specific ways of executing operation by each module have been described in detail in the embodiments of the method, so they are not described here in detail.

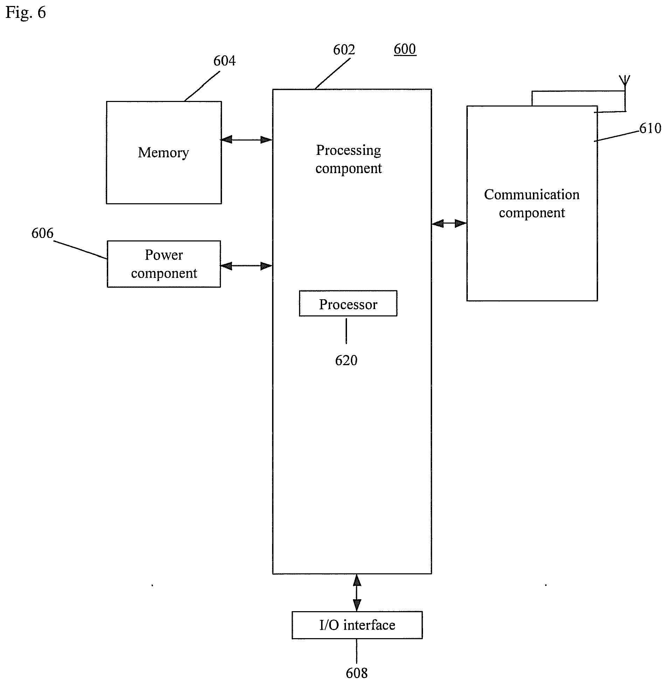

Fig. 6 is a structural diagram of a device for generating a prompt according to an exemplary embodiment. The device 600 may be the smart phone, the smart television, the tablet computer, the intelligent router, the laptop computer, and so on. This embodiment is illustrated by taking that device 600 is the intelligent router for example, which does not form a limit to the invention.

With reference to Fig. 6, the device 600 may include one or more of the following components: a processing component 602, a memory 604, a power component 606, an Input/Output (I/O) interface 608 and a communication component 610.

The processing component 602 typically controls overall operations of the device 600. The processing component 602 may include one or more processors 620 to execute instructions to perform all or part of steps in the above described method. Moreover, the processing component 602 may include one or more modules which facilitate the interaction between the processing component 602 and other components.

The memory 604 is configured to store various types of data to support the operation of the device 600. Examples of these data include instructions for any application or method operated on the device 600. The memory 604 may be implemented using any volatile or any non-volatile storage device, or a combination thereof, such as a Static Random Access Memory (SRAM), an Electrically Erasable Programmable Read-Only Memory (EEPROM), an Erasable Programmable Read Only Memory (EPROM), a Programmable Read Only Memory (PROM), a Read-Only Memory (ROM), a magnetic memory, a flash memory, a disk or a compact disc.

The power component 606 provides power to various components of the device 600. The power component 606 may include a power management system, one or more power sources, and other components associated with generation, management and distribution of power in the device 600.

The I/O interface 608 provides an interface between the processing component 602 and peripheral interface modules.

The communication component 610 is configured to facilitate communication, wired or wirelessly, between the device 600 and other devices. In one exemplary embodiment, the communication component 610 receives a broadcast signal or broadcast associated information from an external broadcast management system via a broadcast channel. In one exemplary embodiment, the communication component 610 further includes a Near Field Communication (NFC) module to facilitate short-range communications. For example, the NFC module may be implemented based on a Radio Frequency Identification (RFID) technology, an Infrared Data Association (IrDA) technology, an Ultra Wide Band (UWB) technology, a Bluetooth (BT) technology, and other technologies.

In exemplary embodiments, the device 600 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components, for performing the above described methods.

In exemplary embodiments, there is also provided a non-transitory computer readable storage medium including instructions, such as included in the memory 604, executable by the processor 620 in the device 600, for performing the above-described methods. For example, the non-transitory computer readable storage medium may be a ROM, a Compact Disc Read Only Memory (CD-ROM), a magnetic tape, a floppy disc, an optical data storage device, and the like.

It is provided a non-transitory computer readable storage medium including instructions that, when executed by the processor of the device 600, cause the device 600 to perform the method for generating a prompt.

It will be appreciated that the present invention is not limited to the exact construction that has been described above and illustrated in the accompanying drawings, and that various modifications and changes can be made without departing from the scope thereof. It is intended that the scope of the invention only be limited by the appended claims.

In the embodiments of the invention, by acquiring the information about the open-or-closed state of the door or window, acquiring the information about indoor and outdoor environments, generating the prompt according to the information about the open-or-closed state of the door or window and the information about the indoor and outdoor environments, it is solved the problem that when the door or window are opened or closed unreasonably, an indoor air environment gets bad, which influences the health of user, and it is achieved the effect of reminding the user to open or close the door or window reasonably according to the condition of indoor and outdoor environments, thereby not only improving the indoor air quality, but also preventing theft and protecting the security of use.

## Claims

1. A method for generating a prompt, comprising:
acquiring (201, 301) information about an open-or-closed state of a door or window;
acquiring (202, 302) information about indoor and outdoor environments;
generating (203) a prompt according to the information about the open-or-closed state of the door or window and the information about the indoor and outdoor environments; **characterized by** further comprising:
acquiring (307A) information about an on or off state of a mobile terminal and information about a geographic location of the mobile terminal;
when the door or window can be opened or closed automatically, sending (307Ba) the prompt to the mobile terminal which is in the on state, according to the information about the on-or-off state of the mobile terminal, to control the door or window to open or close automatically according to the prompt; or
when the door or window cannot be opened or closed automatically, sending (307Bb) the prompt to the mobile terminal which is in the on state and is nearest to the door or window, according to the information about the on-or-off state of the mobile terminal and the information about the geographic location of the mobile terminal.

2. The method according to claim 1, wherein the step of generating the prompt according to the information about the open-or-closed state of the door or window and the information about the indoor and outdoor environments comprises:
determining (303) a correct open-or-closed state the door or window is supposed to be in according to the information about the indoor and outdoor environments;
detecting (304) whether the open-or-closed state of the door or window is identical to the correct open-or-closed state; and
in the case that the open-or-closed state of the door or window is different from the correct open-or-closed state, generating (306) the prompt according to the correct open-or-closed state.

3. The method according to claim 2, wherein the step (303) of determining the correct open-or-closed state the door or window is supposed to be in according to the information about the indoor and outdoor environments comprises:
detecting (303A) whether outdoor environment quality is better than indoor environment quality according to the information about the indoor and outdoor environments;
in the case that the outdoor environment quality is better than the indoor environment quality, determining (303B) that the correct open-or-closed state is an open state; or in the case that the indoor environment quality is better than the outdoor environment quality, determining that the correct open-or-closed state is a closed state.

4. The method according to claim 2, wherein the step (303) of determining the correct open-or-closed state the door or window is supposed to be in according to the information about the indoor and outdoor environments comprises:
acquiring (303C) working state information of a specified device which is carried in the information about the indoor and outdoor environments;
in the case that the working state information indicates that the specified device is in a running state, determining (303D) that the correct open-or-closed state is a closed state; or in the case that the working state information indicates that the specified device is in an off state, determining that the correct open-or-closed state is an open state,
wherein the specified device comprises: an air purifier, a refrigerating unit or a heating unit.

5. The method according to claim 2, wherein the step (303) of determining the correct open-or-closed state the door or window is supposed to be in according to the information about the indoor and outdoor environments comprises:
acquiring (303E) harmful indoor gas content which is carried in the information about the indoor and outdoor environments;
detecting (303F) whether the harmful indoor gas content exceeds a preset threshold; and
in the case that the harmful indoor gas content exceeds the preset threshold, determining (303G) that the correct open-or-closed state is an open state.

6. The method according to claim 1, further comprising:
controlling (308) the open-or-closed state of the door or window, wherein the open-or-closed state comprises at least one of the following: whether the door or window is open, an open mode of the door or window, and an open angle of the door or window.

7. The method according to claim 6, wherein the step (308) of controlling the open-or-closed state of the door or window comprises:
controlling (308A) the door or window to open or close automatically according to the prompt; or
receiving (308B) feedback information which is sent by the mobile terminal in response to the received the prompt, and controlling the door or window to open or close according to the feedback information.

8. A device for generating a prompt, comprising:
a first acquiring module (401, 501), configured to acquire information about an open-or-closed state of a door or window;
a second acquiring module (402, 502), configured to acquire information about indoor and outdoor environments;
a generating module (403, 503), configured to generate a prompt according to the information about the open-or-closed state of the door or window and the information about the indoor and outdoor environments; **characterized by** further comprising:
a third acquiring sub-module (504A), configured to acquire information about an on-or-off state of a mobile terminal and information about a geographic location of the mobile terminal;
a first sending sub-module (504Ba), configured to: when the door or window can be opened or closed automatically, send the prompt to the mobile terminal which is in the on state, according to the information about the on-or-off state of the mobile terminal, to control the door or window to open or close automatically according to the prompt; or
a second sending sub-module (504Bb), configured to: when the door or window cannot be opened or closed automatically, send the prompt to the mobile terminal which is the an on state and is nearest to the door or window, according to the information about the on-or-off state of the mobile terminal and the information about the geographic location of the mobile terminal.

9. The device according to claim 8, wherein the generating module (503) comprises:
a determining sub-module (503A), configured to determine a correct open-or-closed state the door or window is supposed to be in according to the information about the indoor and outdoor environments;
a detecting sub-module (503B), configured to detect whether the open-or-closed state of the door or window is identical to the correct open-or-closed state; and
a generating sub-module (503C), configured to, in the case that the open-or-closed state of the door or window is different from the correct open-or-closed state, generate the prompt according to the correct open-or-closed state.

10. A computer program including instructions for executing the steps of a method for generating a prompt according to any one of claims 1 to 7 when said program is executed by a computer.

11. A recording medium readable by a computer and having recorded thereon a computer program including instructions for executing the steps of a method for generating a prompt according to any one of claims 1 to 7.

## Patentansprüche

1. Verfahren zur Erzeugung einer Aufforderung, umfassend:
Erfassen (201, 301) von Informationen über einen Offen/Geschlossen-Zustand einer Tür oder eines Fensters,
Erfassen (202, 302) von Informationen über eine innere und eine äußere Umgebung,
Erzeugen (203) einer Aufforderung gemäß den Informationen über den Offen/Geschlossen-Zustand der Tür oder des Fensters und den Informationen über die innere und die äußere Umgebung,
**dadurch gekennzeichnet, dass** es ferner umfasst:
Erfassen (307A) von Informationen über einen Ein/Aus-Zustand eines mobilen Endgeräts und von Informationen über einen geografischen Ort des mobilen Endgeräts,
wenn die Tür oder das Fenster automatisch geöffnet oder geschlossen werden können, Senden (307Ba) der Aufforderung an das mobile Endgerät, das sich gemäß den Informationen über den Ein/Aus-Zustand des mobilen Endgeräts in dem Ein-Zustand befindet, die Tür oder das Fenster gemäß der Aufforderung zu steuern, um automatisch zu öffnen oder zu schließen, oder
wenn die Tür oder das Fenster nicht automatisch geöffnet oder geschlossen werden können, Senden (307Bb) der Aufforderung an das mobile Endgerät, das sich gemäß den Informationen über den Ein/Aus-Zustand des mobilen Endgeräts und den Informationen über den geographischen Ort des mobilen Endgeräts in dem Ein-Zustand befindet und der Tür oder dem Fenster am nächsten ist.

2. Verfahren nach Anspruch 1, wobei der Schritt des Erzeugens der Aufforderung gemäß den Informationen über den Offen/Geschlossen-Zustand der Tür oder des Fensters und den Informationen über die innere und die äußere Umgebung umfasst:
Bestimmen (303) eines richtigen Offen/Geschlossen-Zustands, in dem sich die Tür oder das Fenster gemäß den Informationen über die innere und die äußere Umgebung befinden soll,
Erkennen (304), ob der Offen/Geschlossen-Zustand der Tür oder des Fensters mit dem richtigen Offen/Geschlossen-Zustand identisch ist, und
in dem Fall, dass der Offen/Geschlossen-Zustand der Tür oder des Fensters sich von dem richtigen Offen/Geschlossen-Zustand unterscheidet, Erzeugen (306) der Aufforderung gemäß dem richtigen Offen/Geschlossen-Zustand.

3. Verfahren nach Anspruch 2, wobei der Schritt (303) des Bestimmens des richtigen Offen/Geschlossen-Zustands, in dem sich die Tür oder das Fenster gemäß den Informationen über die inneren und äußeren Umgebungen befinden soll, umfasst:
Erkennen (303A), ob gemäß den Informationen über die innere und die äußere Umgebung die Qualität der äußeren Umgebung besser ist als die Qualität der inneren Umgebung,
in dem Fall, dass die Qualität der äußeren Umgebung besser ist als die Qualität der inneren Umgebung, Bestimmen (303B), dass der richtige Offen/Geschlossen-Zustand ein offener Zustand ist, oder in dem Fall, dass die Qualität der inneren Umgebung besser ist als die Qualität der äußeren Umgebung, Bestimmen, dass der richtige Offen/Geschlossen-Zustand ein geschlossener Zustand ist.

4. Verfahren nach Anspruch 2, wobei der Schritt (303) des Bestimmens des richtigen Offen/Geschlossen-Zustands, in dem sich die Tür oder das Fenster gemäß den Informationen über die inneren und äußeren Umgebungen befinden soll, umfasst:
Erfassen (303C) von Arbeitszustandsinformationen einer spezifizierten Vorrichtung, die in den Informationen über die innere und die äußeren Umgebung enthalten sind,
in dem Fall, dass die Arbeitszustandsinformationen angeben, dass sich die spezifizierte Vorrichtung in einem arbeitenden Zustand befindet, Bestimmen (303D), dass der richtige Offen/Geschlossen-Zustand ein geschlossener Zustand ist, oder in dem Fall, dass die Arbeitszustandsinformationen angeben, dass sich die spezifizierte Vorrichtung in einem Aus-Zustand befindet, Bestimmen, dass der richtige Offen/Geschlossen-Zustand ein offener Zustand ist,
wobei die spezifizierte Vorrichtung umfasst: einen Luftreiniger, eine Kühleinheit, oder eine Heizeinheit.

5. Verfahren nach Anspruch 2, wobei der Schritt (303) des Bestimmens des richtigen Offen/Geschlossen-Zustands, in dem sich die Tür oder das Fenster gemäß den Informationen über die innere und die äußeren Umgebung befinden soll, umfasst:
Erfassen (303E) eines Gehalts an schädlichem Innenraumgas, der in den Informationen über die innere und die äußere Umgebung enthalten ist,
Erkennen (303F), ob der Gehalt an schädlichem Innenraumgas einen voreingestellten Schwellenwert überschreitet, und
in dem Fall, dass der Gehalt an schädlichem Innenraumgas den voreingestellten Schwellenwert überschreitet, Bestimmen (303G), dass der richtige Offen/Geschlossen-Zustand ein offener Zustand ist.

6. Verfahren nach Anspruch 1, ferner umfassend:
Steuern (308) des Offen/Geschlossen-Zustands der Tür oder des Fensters, wobei der Offen/Geschlossen-Zustand mindestens einen des Folgenden umfasst: ob die Tür oder das Fenster offen ist, einen Offen-Modus der Tür oder des Fensters, und einen Öffnungswinkel der Tür oder des Fensters.

7. Verfahren nach Anspruch 6, wobei der Schritt (308) des Steuerns des Offen/Geschlossen-Zustands der Tür oder des Fensters umfasst:
Steuern (308A) der Tür oder des Fensters, automatisch zu öffnen oder zu schließen gemäß der Aufforderung, oder
Empfangen (308B) von Rückmeldungsinformationen, die von dem mobilen Endgerät als Antwort auf die empfangene Aufforderung gesendet werden, und Steuern der Tür oder des Fensters, gemäß den Rückmeldungsinformationen zu öffnen oder zu schließen.

8. Vorrichtung zur Erzeugung einer Aufforderung, umfassend:
ein erstes Erfassungsmodul (401, 501), das konfiguriert ist, Informationen über einen Offen/Geschlossen-Zustand einer Tür oder eines Fensters zu erfassen,
ein zweites Erfassungsmodul (402, 502), das konfiguriert ist, Informationen über eine innere und eine äußere Umgebung zu erfassen,
ein Erzeugungsmodul (403, 503), das konfiguriert ist, eine Aufforderung gemäß den Informationen über den Offen/Geschlossen-Zustand der Tür oder des Fensters und den Informationen über die innere und die äußere Umgebung zu erzeugen,
**dadurch gekennzeichnet, dass** es ferner umfasst:
ein drittes Erfassungsuntermodul (504A), das konfiguriert ist, Informationen über einen Ein/Aus-Zustand eines mobilen Endgeräts und Informationen über einen geografischen Ort des mobilen Endgeräts zu erfassen,
ein erstes Sendeuntermodul (504Ba), das konfiguriert ist: wenn die Tür oder das Fenster automatisch geöffnet oder geschlossen werden können, die Aufforderung an das mobile Endgerät, das sich gemäß den Informationen über den Ein/Aus-Zustand des mobilen Endgeräts in dem Ein-Zustand befindet, zu senden, um die Tür oder Fenster gemäß der Aufforderung zu steuern, um automatisch zu öffnen oder zu schließen, oder
ein zweites Sendeuntermodul (504Bb), das konfiguriert ist: wenn die Tür oder das Fenster nicht automatisch geöffnet oder geschlossen werden können, die Aufforderung an das mobile Endgerät zu senden, das sich gemäß den Informationen über den Ein/Aus-Zustand des mobilen Endgeräts und den Informationen über den geographischen Ort des mobilen Endgeräts in dem Ein-Zustand befindet und der Tür oder dem Fenster am nächsten ist.

9. Vorrichtung nach Anspruch 8, wobei das Erzeugungsmodul (503) umfasst:
ein Bestimmungs-Untermodul (503A), das konfiguriert ist, einen richtigen Offen/Geschlossen-Zustand zu bestimmen, in dem sich die Tür oder das Fenster gemäß den Informationen über die inneren und äußeren Umgebungen befinden soll,
ein Erkennungs-Untermodul (503B), das konfiguriert ist, zu erkennen, ob der Offen/Geschlossen-Zustand der Tür oder des Fensters mit dem richtigen Offen/Geschlossen-Zustand identisch ist, und
ein Erzeugungs-Untermodul (503C), das konfiguriert ist, in dem Fall, dass der Offen/Geschlossen-Zustand der Tür oder des Fensters sich von dem richtigen Offen/Geschlossen-Zustand unterscheidet, die Aufforderung gemäß dem richtigen Offen/Geschlossen-Zustand zu erzeugen.

10. Computerprogramm, das Anweisungen zum Ausführen der Schritte eines Verfahrens zur Erzeugung einer Aufforderung nach einem der Ansprüche 1 bis 7, wenn das Programm von einem Computer ausgeführt wird, umfasst.

11. Aufzeichnungsmedium, das von einem Computer lesbar ist und auf dem ein Computerprogramm aufgezeichnet ist, das Anweisungen zum Ausführen der Schritte eines Verfahrens zur Erzeugung einer Aufforderung nach einem der Ansprüche 1 bis 7 umfasst.

## Revendications

1. Procédé de génération d'une invite, comprenant :
l'acquisition (201, 301) d'une information sur un état ouvert ou fermé d'une porte ou d'une fenêtre ;
l'acquisition (202, 302) d'une information sur des environnements intérieur et extérieur ;
la génération (203) une invite selon l'information sur l'état ouvert ou fermé de la porte ou de la fenêtre, et selon l'information sur les environnements intérieur et extérieur ; **caractérisé en ce qu'**il comprend en outre :
l'acquisition (307A) d'une information sur un état sous tension ou hors tension d'un terminal mobile et d'une information sur l'emplacement géographique du terminal mobile ;
lorsque la porte ou la fenêtre peut être ouverte ou fermée automatiquement, l'envoi (307Ba) de l'invite au terminal mobile qui est dans l'état sous tension, selon l'information sur l'état sous tension ou hors tension du terminal mobile, en vue de commander l'ouverture ou la fermeture automatique de la porte ou de la fenêtre selon l'invite ; ou
lorsque la porte ou la fenêtre ne peut pas être ouverte ou fermée automatiquement, l'envoi (307Bb) de l'invite au terminal mobile qui est dans l'état sous tension et qui est le plus proche de la porte ou de la fenêtre, selon l'information sur l'état sous tension ou hors tension du terminal mobile et l'information sur l'emplacement géographique du terminal mobile.

2. Procédé selon la revendication 1, dans lequel l'étape consistant à générer l'invite selon l'information sur l'état ouvert ou fermé de la porte ou de la fenêtre et selon l'information sur les environnements intérieur et extérieur comprend :
la détermination (303) d'un état ouvert ou fermé correct dans lequel la porte ou la fenêtre est censée se trouver selon l'information sur les environnements intérieur et extérieur ;
la détection (304) de si l'état ouvert ou fermé de la porte ou de la fenêtre est identique à l'état ouvert ou fermé correct ; et
dans le cas où l'état ouvert ou fermé de la porte ou de la fenêtre est différent de l'état ouvert ou fermé correct, la génération (306) de l'invite selon l'état ouvert ou fermé correct.

3. Procédé selon la revendication 2, dans lequel l'étape (303) de détermination de l'état ouvert ou fermé correct dans lequel la porte ou la fenêtre est censée se trouver selon l'information sur les environnements intérieur et extérieur comprend :
la détection (303A) de si la qualité de l'environnement extérieur est meilleure que la qualité de l'environnement intérieur selon l'information sur les environnements intérieur et extérieur ;
dans le cas où la qualité de l'environnement extérieur est meilleure que la qualité de l'environnement intérieur, la détermination (303B) que l'état ouvert ou fermé correct correspond à un état ouvert ; ou
dans le cas où la qualité de l'environnement intérieur est meilleure que la qualité de l'environnement extérieur, la détermination que l'état ouvert ou fermé correct correspond à un état fermé.

4. Procédé selon la revendication 2, dans lequel l'étape (303) de détermination de l'état ouvert ou fermé correct dans lequel la porte ou la fenêtre est censée se trouver selon l'information sur les environnements intérieur et extérieur comprend :
l'acquisition (303C) d'une information d'état de fonctionnement d'un dispositif spécifié qui est contenue dans l'information sur les environnements intérieur et extérieur ;
dans le cas où l'information d'état de fonctionnement indique que le dispositif spécifié est dans un état d'exécution en cours, la détermination (303D) que l'état ouvert ou fermé correct correspond à un état fermé ; ou
dans le cas où l'information d'état de fonctionnement indique que le dispositif spécifié est dans un état hors tension, la détermination que l'état ouvert ou fermé correct correspond à un état ouvert ;
dans lequel le dispositif spécifié comprend : un purificateur d'air, une unité de réfrigération ou une unité de chauffage.

5. Procédé selon la revendication 2, dans lequel l'étape (303) de détermination de l'état ouvert ou fermé correct dans lequel la porte ou la fenêtre est censée se trouver selon l'information sur les environnements intérieur et extérieur comprend :
l'acquisition (303E) d'une teneur en gaz ambiant nocif qui est contenue dans l'information sur les environnements intérieur et extérieur ;
la détection (303F) de si la teneur en gaz ambiant nocif dépasse un seuil prédéfini ; et
dans le cas où la teneur en gaz ambiant nocif dépasse le seuil prédéfini, la détermination (303G) que l'état ouvert ou fermé correct correspond à un état ouvert.

6. Procédé selon la revendication 1, comprenant en outre :
la commande (308) de l'état ouvert ou fermé de la porte ou de la fenêtre, dans lequel l'état ouvert ou fermé comprend au moins l'un des éléments suivants : si la porte ou la fenêtre est ouverte, un mode d'ouverture de la porte ou de la fenêtre, et un angle d'ouverture de la porte ou de la fenêtre.

7. Procédé selon la revendication 6, dans lequel l'étape (308) de commande de l'état ouvert ou fermé de la porte ou de la fenêtre comprend :
la commande (308A) de l'ouverture ou la fermeture automatique de la porte ou de la fenêtre selon l'invite ; ou
la réception (308B) d'une information de retour qui est envoyée par le terminal mobile en réponse à l'invite reçue, et la commande de l'ouverture ou la fermeture de la porte ou de la fenêtre selon l'information de retour.

8. Dispositif destiné à générer une invite, comprenant :
un premier module d'acquisition (401, 501), configuré de manière à acquérir une information sur un état ouvert ou fermé d'une porte ou d'une fenêtre ;
un deuxième module d'acquisition (402, 502), configuré de manière à acquérir une information sur des environnements intérieur et extérieur ;
un module de génération (403, 503), configuré de manière à générer une invite selon l'information sur l'état ouvert ou fermé de la porte ou de la fenêtre et l'information sur les environnements intérieur et extérieur ;
**caractérisé en ce qu'**il comprend en outre :
un troisième sous-module d'acquisition (504A), configuré de manière à acquérir une information sur un état sous tension ou hors tension d'un terminal mobile et une information sur l'emplacement géographique du terminal mobile ;
un premier sous-module d'envoi (504Ba), configuré de sorte que : lorsque la porte ou la fenêtre peut être ouverte ou fermée automatiquement, envoyer l'invite au terminal mobile qui est dans l'état sous tension, selon l'information sur l'état sous tension ou hors tension du terminal mobile, en vue de commander l'ouverture ou la fermeture automatique de la porte ou de la fenêtre selon l'invite ; ou
un second sous-module d'envoi (504Bb), configuré de sorte que : lorsque la porte ou la fenêtre ne peut pas être ouverte ou fermée automatiquement, envoyer l'invite au terminal mobile qui est dans l'état sous tension et qui est le plus proche de la porte ou de la fenêtre, selon l'information sur l'état sous tension ou hors tension du terminal mobile et l'information sur l'emplacement géographique du terminal mobile.

9. Dispositif selon la revendication 8, dans lequel le module de génération (503) comprend :
un sous-module de détermination (503A), configuré de manière à déterminer un état ouvert ou fermé correct dans lequel la porte ou la fenêtre est censée se trouver selon l'information sur les environnements intérieur et extérieur ;
un sous-module de détection (503B), configuré de manière à détecter si l'état ouvert ou fermé de la porte ou de la fenêtre est identique à l'état ouvert ou fermé correct ; et
un sous-module de génération (503C), configuré de manière à, dans le cas où l'état ouvert ou fermé de la porte ou de la fenêtre est différent de l'état ouvert ou fermé correct, générer l'invite selon l'état ouvert ou fermé correct.

10. Programme informatique incluant des instructions pour exécuter les étapes d'un procédé de génération d'une invite selon l'une quelconque des revendications 1 à 7, lorsque ledit programme est exécuté par un ordinateur.

11. Support d'enregistrement lisible par un ordinateur et sur lequel est enregistré un programme informatique comprenant des instructions pour exécuter les étapes d'un procédé de génération d'une invite selon l'une quelconque des revendications 1 à 7.
